(19) **Europäisches Patentamt**
**European Patent Office**
**Office européen des brevets**

(11) **EP 1 749 328 B1**

(12) **FASCICULE DE BREVET EUROPEEN**

(45) Date de publication et mention
de la délivrance du brevet:
**03.12.2008 Bulletin 2008/49**

(51) Int Cl.:
**H01M 10/44** *(2006.01)*

(21) Numéro de dépôt: **05769570.2**

(22) Date de dépôt: **03.05.2005**

(86) Numéro de dépôt international:
**PCT/FR2005/001124**

(87) Numéro de publication internationale:
**WO 2005/122319 (22.12.2005 Gazette 2005/51)**

(54) **PROCEDE DE CHARGE D'UNE BATTERIE**

BATTERIEAUFLADEVERFAHREN

BATTERY CHARGING METHOD

(84) Etats contractants désignés:
**AT BE BG CH CY CZ DE DK EE ES FI FR GB GR HU IE IS IT LI LT LU MC NL PL PT RO SE SI SK TR**

(30) Priorité: **13.05.2004 FR 0405200**

(43) Date de publication de la demande:
**07.02.2007 Bulletin 2007/06**

(73) Titulaire: **COMMISSARIAT A L'ENERGIE ATOMIQUE**
**75015 Paris (FR)**

(72) Inventeurs:
• **LE GALL, Murielle**
**F-78150 Le Chesnay (FR)**
• **BENCHETRITE, Daniel**
**F-94000 Créteil (FR)**
• **BACH, Olivier**
**F-33980 Audenge (FR)**

(74) Mandataire: **Jouvray, Marie-Andrée et al**
**Cabinet Hecké**
**World Trade Center - Europole**
**5, place Robert Schuman**
**B.P. 1537**
**F-38025 Grenoble Cedex 1 (FR)**

(56) Documents cités:
**EP-A- 0 330 981**     **EP-A- 1 341 286**
**FR-A- 2 239 772**     **US-A- 5 412 306**
**US-A- 5 710 506**     **US-A- 6 154 011**

• **PATENT ABSTRACTS OF JAPAN vol. 1999, no. 02, 26 février 1999 (1999-02-26) & JP 10 302845 A (MATSUSHITA ELECTRIC IND CO LTD), 13 novembre 1998 (1998-11-13)**

EP 1 749 328 B1

## Description

### Domaine technique de l'invention

L'invention concerne un procédé de charge d'une batterie par des impulsions rectangulaires de courant, prenant alternativement une première amplitude, pendant une première période, et une seconde amplitude, différente de la première, pendant une seconde période. Ce procédé comporte la détermination d'une première valeur de pente, représentative de la variation de la tension aux bornes de la batterie en fonction du temps, à partir de mesures successives de ladite tension pendant chaque première période.

### État de la technique

La charge ou la recharge d'une batterie est classiquement réalisée sous le contrôle d'un régulateur de charge. Les divers modes de gestion de charge d'une batterie actuellement utilisés sont fondés soit sur la mesure de la tension aux bornes de la batterie soit sur la mesure du courant de charge de la batterie.

Un premier mode de gestion connu est de type connexion/déconnexion ("On/Off"), basé sur l'interruption de la charge lorsque la tension atteint un seuil haut et sa reprise lorsque la tension atteint un seuil de tension de reconnexion. Dans ce mode de gestion, facile à mettre en oeuvre, les seuils de tension sont souvent mal ajustés et il est difficile d'atteindre la charge complète de la batterie.

Un autre mode de gestion connu consiste à maintenir constante la tension de la batterie, ce qui permet de diminuer la valeur du courant lorsque la tension désirée est atteinte, éventuellement en utilisant alors une modulation de type PWM (modulation de largeur d'impulsion) du courant de charge. Cependant, la dissipation de puissance requise est importante et les seuils de tension sont souvent mal ajustés.

Les deux modes de gestion ci-dessus, fondés sur la mesure de la tension, ne sont pas optimisés pour tenir compte des différentes technologies de batteries et de leurs différentes applications.

Un mode de gestion basé sur la mesure du courant utilise le comptage des ampères-heures entrés et sortis de la batterie. Ce mode de gestion est peu répandu car il est imprécis dans le temps et ne prend pas correctement en compte le dégazage, notamment dans le cas de batteries au plomb-acide ouvertes à électrolyte liquide.

Un autre mode de gestion, développé notamment pour les batteries des véhicules électriques, utilise un courant de charge pulsé. Ceci permet notamment de réduire le temps de recharge de la batterie, mais les paramètres de courant sont souvent mal ajustés.

Le brevet US 6154011 propose de modifier le courant moyen de charge de la batterie en fonction de la surtension moyenne, de manière à maintenir un niveau d'hydrolyse acceptable. Le courant moyen de charge peut être adapté par une réduction de l'amplitude des impulsions de courant, par une augmentation de l'intervalle entre deux impulsions de courant ("OFF-time") et/ou par une diminution de la durée ("ON-time") des impulsions de courant de charge.

Le brevet US 5412306 propose de diminuer l'amplitude d'une impulsion de courant d'un facteur prédéterminé, par exemple de la diviser par 2, de manière à constituer une impulsion en forme d'escalier ("stepped-down pulse") lorsque la pente de la tension en fonction du temps s'annule après avoir atteint une certaine valeur (par exemple 2,5 V/s). La fin de la charge de la batterie n'est donc pas réalisée par du courant pulsé, mais par une succession d'impulsions en forme d'escalier, ayant chacune des paliers d'amplitude décroissante.

Le document EP-A-1341286 décrit un procédé de charge d'une batterie comportant une phase de charge rapide, une phase de charge d'égalisation et une phase de charge de maintenance. La phase de charge rapide se termine lorsque la tension présente deux points d'inflexion de signes opposés. Pendant les phases de charge d'égalisation et de maintenance, le courant de charge peut être un courant pulsé.

Dans le procédé de charge d'une batterie selon le brevet US 5710506, la charge se termine lorsque la tension aux bornes de la batterie ou le gradient de la tension dépasse une valeur de seuil. Pendant une phase de maintenance, le courant peut être nul jusqu'à ce que la tension redescende au-dessous d'un seuil de tension et prendre une valeur maximale prédéterminée jusqu'à ce que la tension ou son gradient atteigne un seuil prédéterminé.

Les divers procédés de charge par courant pulsé connus ne sont pas optimisés pour les différents types de batteries commercialisées.

### Objet de l'invention

L'invention a pour but de surmonter les inconvénients des procédés de charge connus et, plus particulièrement, de permettre de déterminer l'ensemble des paramètres de charge, par courant pulsé, de tout type de batterie et pour tout type d'application.

Selon l'invention, ce but est atteint par un procédé de charge selon les revendications annexées et, plus particulièrement par le fait que, la première amplitude et la durée de la première période étant préalablement déterminées, le procédé comporte l'asservissement d'au moins un des paramètres du courant pendant les premières périodes ultérieures à ladite première valeur de pente, calculée et comparée à une première plage prédéterminée à la fin de chaque première période, la première amplitude de courant et/ou la durée de la première période étant modifiées si la première valeur de pente sort de la première plage.

## Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

La figure 1 illustre schématiquement les variations, en fonction du temps, du courant de charge 1 d'une batterie chargée par le procédé selon l'invention, ainsi que les variations correspondantes de la tension U.

La figure 2 illustre les variations, en fonction du temps, de la tension U aux bornes de la batterie chargée par le procédé selon l'invention.

Les figures 3 à 6 illustrent les variations, en fonction du temps, de la tension U aux bornes d'une batterie, respectivement lorsque la durée d'une première période t1 n'est pas adaptée (figures 3 et 4) ou lorsque la durée t2 d'une seconde période n'est pas adaptée (figures 5 et 6).

Les figures 7 à 10 représentent des organigrammes d'un premier mode de réalisation du procédé selon l'invention.

Les figures 11 à 14 représentent des organigrammes d'un second mode de réalisation du procédé selon l'invention

Les figures 15 et 16 représentent les organigrammes de deux autres modes de réalisation d'un procédé selon l'invention.

Les figures 17 et 18 illustrent plus en détail les variations de la tension mesurée lors de la charge d'une batterie, chargée avec des impulsions d'amplitude constante, respectivement avant et après adaptation des paramètres temporels des impulsions de courant conformément à l'invention.

Les figures 19 et 20 illustrent plus en détail les variations de la tension mesurée lors de la charge d'une batterie, chargée avec un courant pulsé d'amplitude moyenne constante, respectivement avant et après adaptation des paramètres des impulsions de courant conformément à l'invention.

## Description de modes particuliers de réalisation

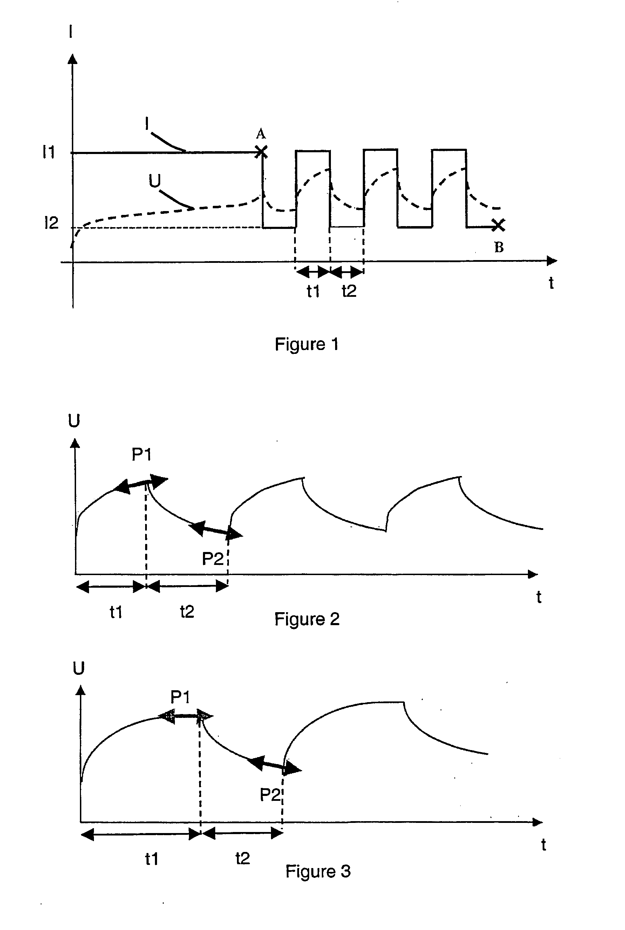

Sur la figure 1, le courant de charge I de la batterie est un courant pulsé entre des instants A et B, après application d'un courant d'amplitude constante jusqu'à l'instant A. Pour favoriser le nombre de sites de germination par rapport à la croissance des cristaux à l'intérieur de la batterie, il est cependant préférable que le courant pulsé soit appliqué à la batterie dès le début de la charge ou de la recharge.

Le courant pulsé est classiquement constitué par des impulsions rectangulaires de courant, prenant alternativement une première amplitude I1, pendant une première période t1, et une seconde amplitude I2, inférieure à la première, pendant une seconde période t2.

Comme illustré à la figure 2, une première valeur de la pente P1 de la tension U, mesurée aux bornes de la batterie à charger, est calculée au moins à la fin de la première période t1. Au moins un des paramètres (I1, t1) du courant pendant la première période est automatiquement asservi à la première valeur de pente P1 calculée. De manière analogue, une seconde valeur de la pente P2 de la tension U, mesurée aux bornes de la batterie à charger, est calculée au moins à la fin de la seconde période t2. Au moins un des paramètres (12, t2) du courant pendant la seconde période est automatiquement asservi à la seconde valeur de pente P2 calculée.

Les différents paramètres du courant de charge pulsé sont ainsi asservis en continu sur la pente P de la tension U mesurée aux bornes de la batterie. Sur la figure 2, les valeurs absolues des première et seconde valeurs de pente P1 et P2, représentatives de la variation de la tension U en fonction du temps, respectivement à la fin des première et seconde périodes (t1, t2), sont comprises entre 1 mV/s et 6mV/s. L'évolution dans le temps de la tension U ainsi obtenue est alors optimale.

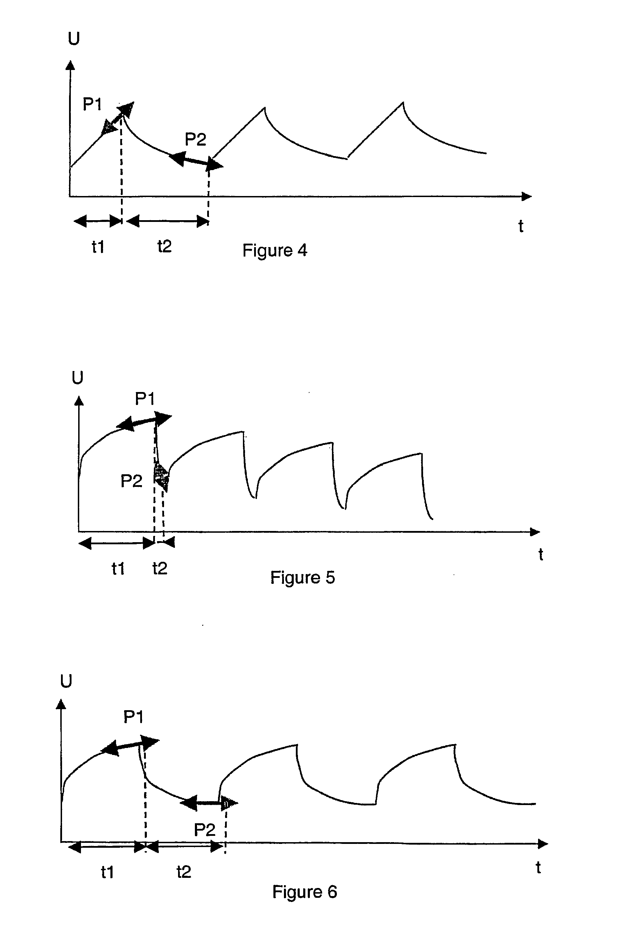

Par contre, en l'absence d'asservissement conforme à l'invention, sur les figures 3 et 4, la durée de la première période t1 est inadaptée, respectivement trop longue et trop courte, et la première valeur de pente P1, à la fin de la première période, est respectivement inférieure à 1mV/s et supérieure à 6mV/s. De même, sur les figures 5 et 6, la durée de la seconde période t2 est inadaptée, respectivement trop courte et trop longue, et la valeur absolue de la seconde valeur de pente P2, à la fin de la seconde période, est respectivement supérieure à 6mV/s et inférieure à 1 mV/s.

La charge de la batterie avec un courant pulsé asservi sur la pente de la tension, conformément à l'invention, permet d'optimiser la charge en fonction du type de batterie et du domaine d'application de cette batterie. La charge s'effectue alors dans un temps minimum, tout en régulant l'hydrolyse de façon efficace pour les batteries à électrolyte liquide aqueux et en augmentant la capacité et la durée de vie de la batterie.

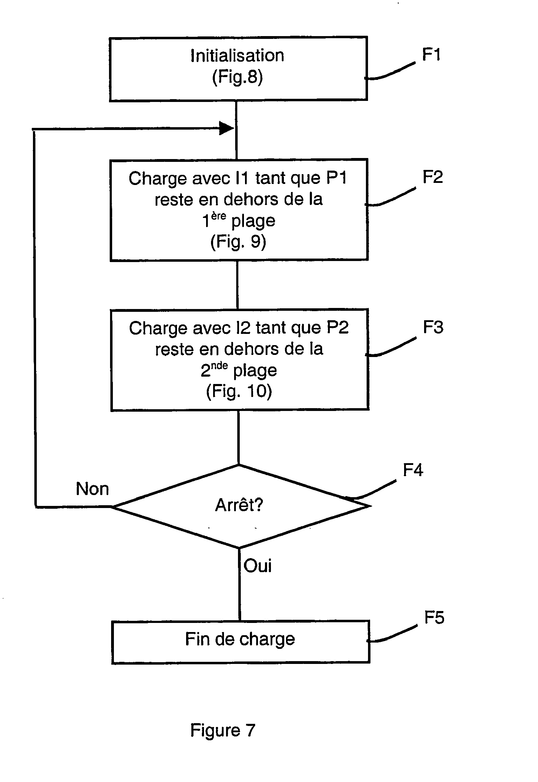

Les figures 7 à 10 illustrent un exemple d'organigrammes d'un premier mode de réalisation d'un procédé selon l'invention, qui peut être mis en oeuvre par tout régulateur de charge de type connu.

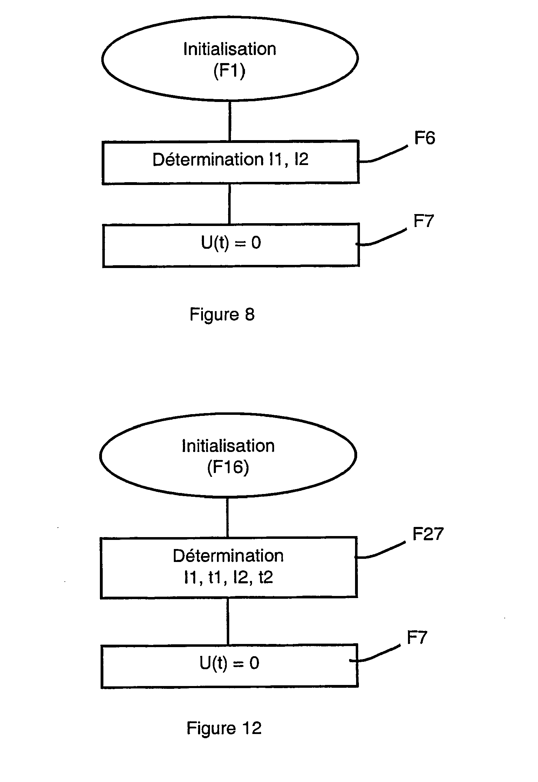

Comme illustré à la figure 7, dans une première étape F1, illustrée plus en détail à la figure 8, les paramètres de charge sont initialisés en fonction des caractéristiques techniques de la batterie à charger et du domaine d'application envisagé pour cette batterie, qui déterminent ses conditions de fonctionnement. À titre d'exemple, une batterie au plomb-acide à régulation par soupape ou batterie de type VRLA ("valve regulated lead-acid"), utilisée dans une installation photovoltaïque, sera chargée par un courant pulsé dont les premières et secondes valeurs I1 et I2 dépendent directement de l'énergie produite par les panneaux photovoltaïques. La tension U à ses bornes devra être limitée pour ne pas dépasser un seuil, en moyenne de l'ordre de 2,4V à 2,45V par cellule électrochimique, de manière à limiter les dégradations susceptibles d'être induites par une hydrolyse importante. Dans un mode de réalisation préférentiel, l'amplitude I2 peut être nulle.

Sur la figure 7, après l'étape d'initialisation F1, le régulateur de charge passe à une étape F2 de charge de la batterie avec un courant ayant une première amplitude I1 tant que la première valeur de pente P1 reste en dehors une première plage, de préférence comprise entre 1 mV/s et 6mV/s. La charge de la batterie par l'impulsion de courant d'amplitude I1 est interrompue lorsque la pente P1 de la tension U aux bornes de la batterie entre dans la plage correspondante. La durée de la première période t1 est ainsi asservie sur la première valeur de pente P1.

Lorsque la première période est interrompue par l'entrée de la première valeur de pente P1 dans la plage correspondante, le régulateur contrôle, dans une étape F3, la charge de la batterie avec un courant ayant une seconde amplitude I2, inférieure à la première amplitude I1, tant que la seconde valeur de pente P2 reste en dehors d'une seconde plage, de préférence identique à la première, c'est-à-dire comprise, en valeur absolue, entre 1 mV/s et 6mV/s. La charge de la batterie par l'impulsion de courant d'amplitude I2 est alors interrompue lorsque la pente P2 entre dans la plage correspondante, asservissant ainsi la durée de la seconde période t2 sur la seconde valeur de pente P2.

Après l'étape F3, le régulateur vérifie, dans une étape F4 (Arrêt ?), si la batterie est suffisamment chargée, c'est-à-dire si la charge doit ou non être interrompue. Le critère de décision correspondant à l'arrêt de la charge peut être constitué par tout critère classiquement utilisé lors de la charge d'une batterie. Si ce critère est satisfait (sortie Oui de F4), le régulateur passe à une étape F5 de fin de charge. Sinon (sortie Non de F4) il se reboucle sur l'entrée de l'étape F2 et poursuit la charge de la batterie par des impulsions prenant alternativement la première et la seconde amplitude I1 et I2, pendant des première et seconde périodes t1 et t2, respectivement asservies sur les première et seconde valeurs de pente P1 et P2.

Des exemples de réalisation des étapes F1 à F3 sont illustrés plus en détail respectivement sur les figures 8 à 10.

Comme représenté à la figure 8, l'étape F1 d'initialisation comporte tout d'abord, dans une étape F6, la détermination des première et seconde amplitudes I1 et I2 du courant de charge en fonction du type de batterie à charger et de l'application envisagée pour cette batterie. Dans le mode de réalisation selon les figures 7 à 10, les amplitudes I1 et I2 restent inchangées pendant toute la charge, les paramètres asservis sur la pente P de la tension U étant les première et seconde périodes t1 et t2. L'étape F6 est suivie d'une étape F7, dans laquelle la valeur de la tension U(t) est initialement mise à zéro.

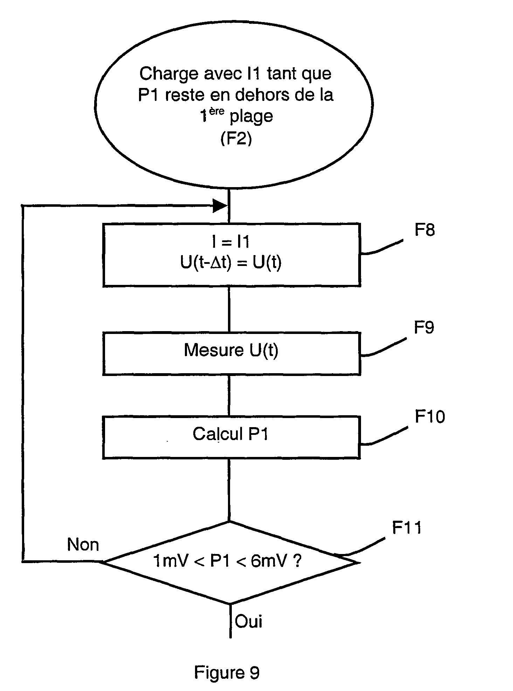

L'étape F2 peut alors, comme représenté à la figure 9, commencer, par une étape F8, dans laquelle le régulateur fixe à la valeur I1 (préalablement déterminée pendant l'étape F6) l'amplitude I du courant de charge (I = I1) et sauvegarde la valeur précédemment enregistrée de la tension : U(t-Δt)=U(t). Puis, dans une étape F9, une nouvelle mesure de tension U(t) est enregistrée avant le calcul, dans une étape F10, de la première valeur de pente P1. La première valeur de pente P1 calculée est ensuite comparée, dans une étape F11, à une première plage. Sur la figure 9, par exemple, le régulateur vérifie si la première valeur de pente P1 est comprise entre 1 mV/s et 6mV/s. Si ce n'est pas le cas (sortie Non de F11), le régulateur se reboucle sur l'étape F8. Il continue donc d'appliquer le courant d'amplitude I1, inchangée, à la batterie et sauvegarde la valeur de la tension précédemment mesurée, avant de calculer une nouvelle valeur de P1. La succession d'étapes F8 à F11 se répète tant que la première valeur de pente P1 reste en dehors de la première plage et, pendant toute cette première période, les mesures successives de la tension U(t) sont réalisées à des intervalles de temps prédéterminés Δt. Ces intervalles de temps Δt ont, de préférence, une durée très inférieure à la première période t1. La première valeur de pente peut alors être calculée en prenant la valeur absolue du rapport entre la différence entre deux valeurs successives de la tension mesurée et du temps Δt écoulé entre ces deux mesures :

$$P1 = \left| (U(t) - U(t-\Delta t)) / \Delta t \right|.$$

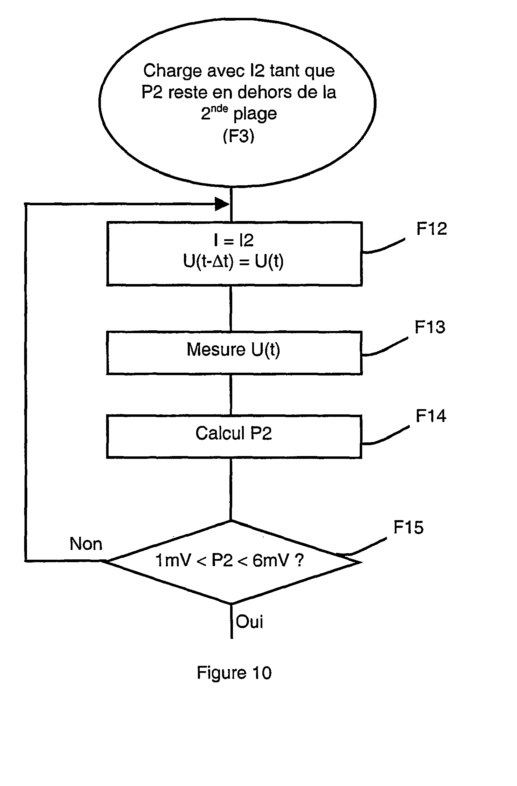

Lorsque, dans l'étape F11, le régulateur constate que la première valeur de pente P1 est entrée dans la première plage (sortie Oui de F11), l'étape F2 se termine et le régulateur passe alors à l'étape F3. Comme représenté à la figure 10, l'étape F3 peut, de manière analogue à l'étape F2, commencer par une étape F12, dans laquelle l'amplitude du courant de charge I est fixée la valeur I2 (préalablement déterminée pendant l'étape F6), la valeur précédemment enregistrée de la tension étant sauvegardée. Puis une nouvelle valeur de la tension U(t) est mesurée et enregistrée dans une étape F13, analogue à l'étape F9, pour permettre ensuite le calcul, dans une étape F14, analogue à l'étape F10, de la seconde valeur de pente P2 = |(U(t) - U(t-Δt)) / Δt| et sa comparaison avec la seconde plage dans une étape F15, analogue à l'étape F11.

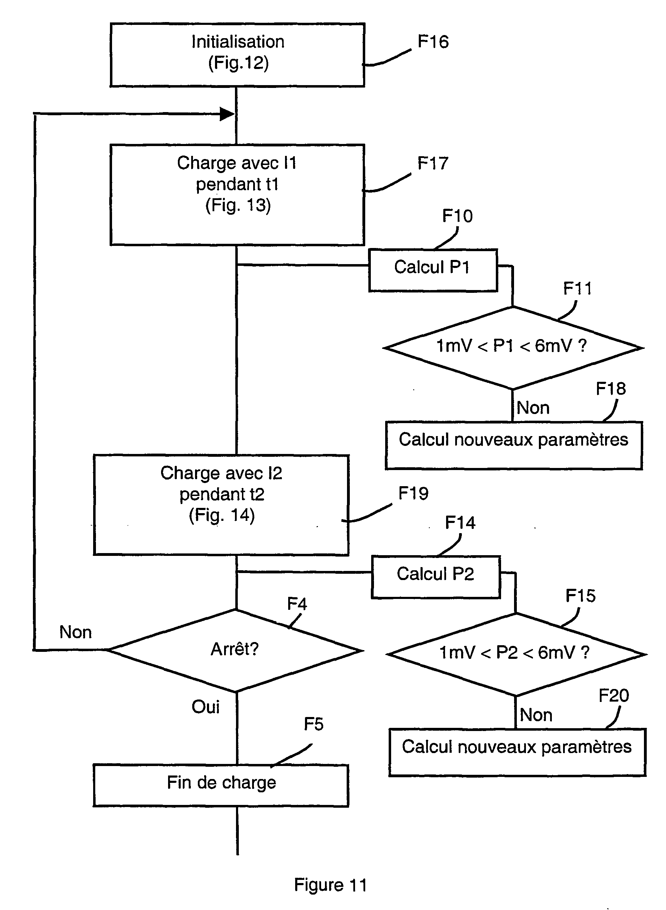

Les figures 11 à 14 illustrent un exemple d'organigrammes d'un second mode de réalisation d'un procédé selon l'invention.

Comme illustré à la figure 11, dans une étape F16, illustrée plus en détail à la figure 12, les paramètres de charge sont tout d'abord initialisés en fonction des caractéristiques techniques de la batterie à charger et du domaine d'application envisagé pour cette batterie. Dans le mode particulier de réalisation illustré à la figure 12, des valeurs initiales des paramètres I1, I2, t1 et t2 sont déterminés au cours d'une étape F27, suivie d'une étape F7, dans laquelle la valeur de la tension de la tension U(t) est initialement mise à zéro.

Sur la figure 11, après l'étape d'initialisation F16, le régulateur de charge passe à une étape F17 de charge de la batterie avec un courant ayant une première amplitude I1 pendant une première période t1. Puis, le régulateur passe à une étape F19 de charge de la batterie avec un courant ayant une seconde amplitude I2 pendant une seconde période t2. Simultanément, à la fin de l'étape F17, le régulateur calcule la première valeur de pente P1, dans une étape F10, puis compare la première valeur de pente calculée à la première plage dans une étape F11. Si la première valeur de pente P1 sort de la première plage (sortie Non de F11), le régulateur modifie certains paramètres dans une étape F18.

De manière analogue, à la fin de l'étape F19, le régulateur calcule la seconde valeur de pente P2, dans une étape F14, puis compare la seconde valeur de pente calculée à la seconde plage dans une étape F15. Si la seconde valeur de pente P2 sort de la seconde plage (sortie Non de F15), le régulateur modifie certains paramètres dans une étape F20. Simultanément, à la sortie de l'étape F19, comme à la sortie de l'étape F3 de la figure 7, le régulateur vérifie, dans une étape F4 (Arrêt ?), si la batterie est suffisamment chargée. Si c'est le cas (sortie Oui de F4), le régulateur passe à une étape F5 de fin de charge. Sinon (sortie Non de F4) il se reboucle sur l'entrée de l'étape F17 et poursuit la charge de la batterie par des impulsions prenant alternativement la première et la seconde amplitude I1 et I2, éventuellement modifiées en F18 ou F20, pendant des première et seconde périodes t1 et t2, éventuellement modifiées en F18 ou F20.

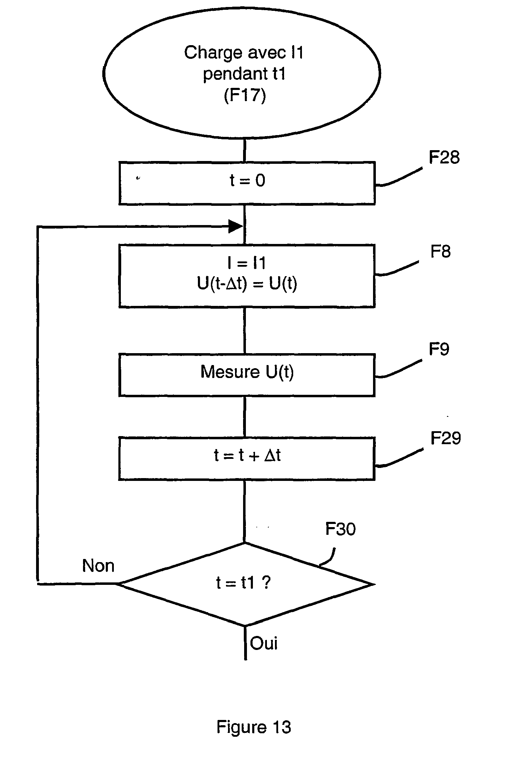

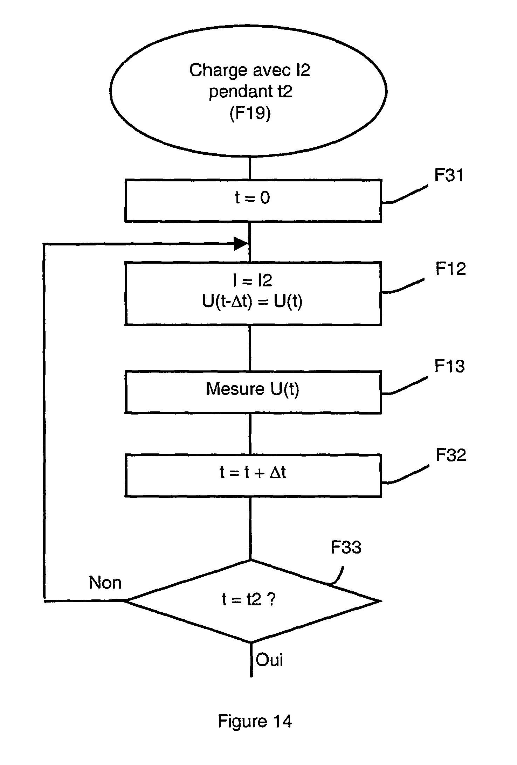

Des exemples de réalisation des étapes F17 et F9 sont illustrés plus en détail respectivement sur les figures 13 et 14.

Sur la figure 13, l'étape F17 commence par une étape F28 dans laquelle une grandeur t, représentative du temps, est mise à zéro (t=0). Puis elle passe à une étape F8 (I=I1 et U(t-$\Delta$t)=U(t)), puis à une étape F9 de mesure de la tension U(t), suivie par une étape F29 d'incrémentation du temps (t=t+$\Delta$t). Le régulateur vérifie ensuite, dans une étape F30, si le temps écoulé depuis le début de l'étape F17 est ou non égal à la première période t1. Si c'est le cas (sortie Oui de F30), l'étape F17 est terminée. Sinon (sortie Non de F30), le régulateur se reboucle sur l'étape F8 et continue à charger la batterie avec l'impulsion d'amplitude I1 jusqu'à la fin de la première période t1.

De manière analogue, sur la figure 14, l'étape F19 commence par une étape F31 dans laquelle la grandeur t, représentative du temps, est mise à zéro (t=0). Puis elle passe à une étape F12 (I=I2 et U(t-$\Delta$t)=U(t)), puis à une étape F13 de mesure de la tension U(t), suivie par une étape F32 d'incrémentation du temps (t=t+$\Delta$t). Le régulateur vérifie ensuite, dans une étape F33, si le temps écoulé depuis le début de l'étape F19 est ou non égal à la seconde période t2. Si c'est le cas (sortie Oui de F33), l'étape F19 est terminée. Sinon (sortie Non de F33), le régulateur se reboucle sur l'étape F12 et continue à charger la batterie avec l'impulsion d'amplitude I2 jusqu'à la fin de la seconde période t2.

Le calcul des nouveaux paramètres dans l'étape F18 est destiné à asservir la première amplitude de courant I1 et/ou la durée de la première période t1 à la première valeur de pente P1 calculée à la fin de la première période t1.

Ainsi, si la première valeur de pente P1 est, en valeur absolue, supérieure à la limite supérieure de la première plage, par exemple supérieure à 6mV/s, cela signifie que la première période t1 est trop courte, comme sur la figure 4, et/ou que la première amplitude I1 est trop élevée. Le calcul des nouveaux paramètres de l'étape F18 consiste alors à augmenter la première période t1 et/ou à diminuer la première amplitude I1, en fonction du domaine d'application de la batterie et de ses conditions de fonctionnement. De manière analogue, si la première valeur de pente P1 est, en valeur absolue, inférieure à la limite inférieure de la première plage, par exemple inférieure à 1 mV/s, cela signifie que la première période t1 est trop longue, comme sur la figure 3, et/ou que la première amplitude I1 est trop basse. Le calcul des nouveaux paramètres de l'étape F18 consiste alors à diminuer la première période t1 et/ou à augmenter la première amplitude I1, en fonction du domaine d'application de la batterie et de ses conditions de fonctionnement. Dans ce dernier cas, pour une installation photovoltaïque, par exemple, le courant délivré par les panneaux solaires dépend de l'ensoleillement et il est donc préférable d'intervenir sur la durée de la période t1 plutôt que sur l'amplitude I1.

De manière analogue, le calcul des nouveaux paramètres dans l'étape F20 permet d'asservir la seconde amplitude de courant I2 et/ou la durée de la seconde période t2 à la seconde valeur de pente P2, calculée à la fin de la seconde période t2.

Dans une variante de réalisation, les paramètres du courant sont modifiés, dans les étapes F18 et/ou F20, de manière à maintenir constante la valeur moyenne du courant de charge, Imoy = (I1t1 + I2t2) / (t1+t2), pendant une période de charge, c'est-à-dire pendant une première période t1 et la seconde période t2 suivante. La valeur moyenne Imoy du courant de charge est alors initialement déterminée, en même temps que les valeurs I1, I2, t1 et t2, pendant la phase d'initialisation F16, en fonction des caractéristiques techniques de la batterie à charger et du domaine d'application envisagé pour cette batterie.

Dans le cas où la seconde amplitude I2 du courant de charge est constamment maintenue à zéro, le calcul des nouveaux paramètres pendant la phase F20 peut agir simultanément sur la seconde période t2 et sur la première amplitude I1, de manière à maintenir constante la valeur moyenne Imoy. Ainsi, si la seconde valeur de pente P2 est, en valeur absolue, supérieure à la limite supérieure de la seconde plage, la seconde durée t2 est augmentée, tandis que la première amplitude I1 est diminuée de manière à maintenir Imoy constante. De manière analogue, si la seconde valeur de pente P2 est, en valeur absolue, inférieure à la limite inférieure de la seconde plage, la seconde durée t2 est diminuée, tandis que la première amplitude I1 est augmentée pour maintenir Imoy constante.

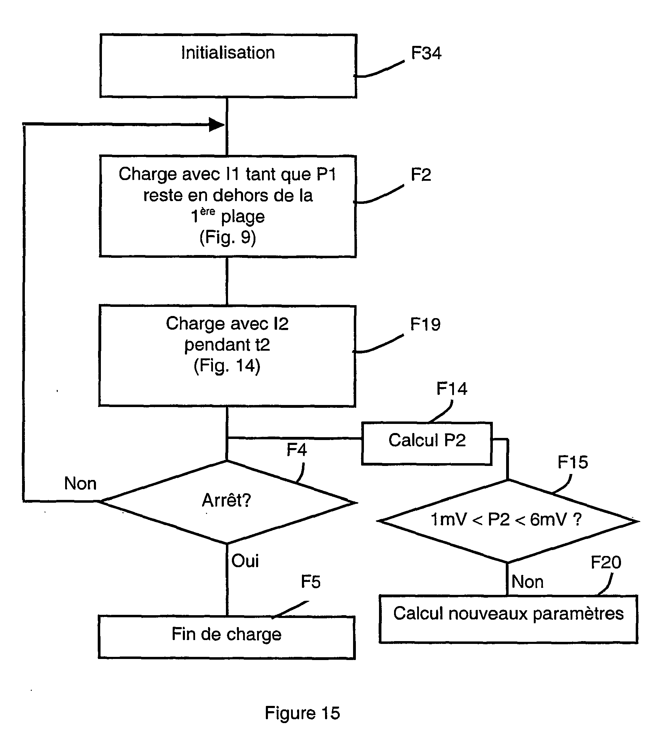

Un troisième mode de réalisation, illustré à la figure 15 combine l'étape F2 du premier mode de réalisation (figure 7) pendant les premières périodes de charge et les étapes F19, F14, F15 et F20 du second mode de réalisation (figure 11) pendant les secondes périodes de charge. Ainsi, dans une étape d'initialisation F34, sont déterminées les valeurs de I1, I2, t2 et, éventuellement Imoy. Puis, dans l'étape F2, le régulateur charge la batterie avec un courant d'amplitude I1 tant que la première valeur de pente P1 reste en dehors de la première plage. Il charge ensuite, dans l'étape F19, la batterie avec un courant d'amplitude I2 pendant la seconde période t2, puis calcule P2 (étape F14) et le compare à la seconde plage (étape F15). Si P2 sort de la seconde plage (sortie Non de F15), le régulateur modifie I2 et/ou t2, éventuellement tout en maintenant constante la valeur moyenne du courant Imoy. Comme sur la figure 11, les étapes F4 et F5 suivent l'étape F19 et le régulateur se reboucle sur l'étape F2 si la charge n'est pas terminée (sortie Non de F4)

Dans ce troisième mode de réalisation, la durée de la première période (t1) est donc asservie sur la première valeur de pente P1, calculée en continu pendant la première période t1. Celle-ci est interrompue lorsque la première valeur de pente P1 entre dans la première plage. Par contre, la seconde valeur de pente P2 est calculée à la fin de la seconde période t2 et la seconde amplitude I2 et/ou la durée de la seconde période t2 sont asservies à cette seconde valeur de pente P2.

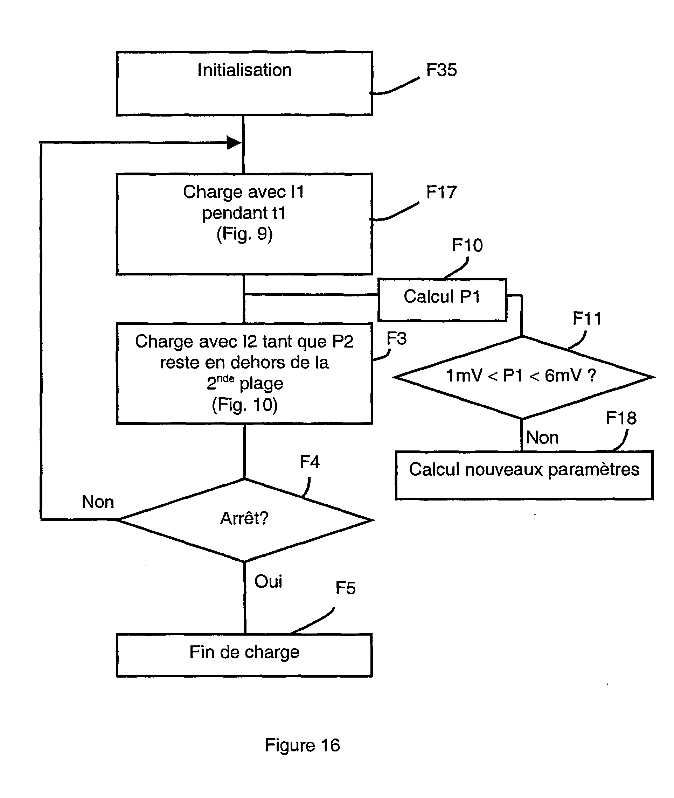

Un quatrième mode de réalisation, illustré à la figure 16 combine les étapes F17, F10, F11 et F18 du second mode de réalisation (figure 11) pendant les premières périodes de charge et l'étape F3 du premier mode de réalisation (figure 7) pendant les secondes périodes de charge. Ainsi, dans une étape d'initialisation F35, sont déterminées les valeurs de I1, t1, I2 et, éventuellement Imoy. Puis, le régulateur charge, dans l'étape F17, la batterie avec un courant d'amplitude I1 pendant la première période t1, avant de passer à l'étape F3, dans laquelle le régulateur charge la batterie avec un courant d'amplitude I2 tant que la seconde valeur de pente P2 reste en dehors de la seconde plage. A la fin de l'étape F17, le régulateur calcule la première valeur de pente P1 (étape F10) et la compare à la première plage (étape F11). Ensuite, si P1 sort de la première plage (sortie Non de F11), le régulateur modifie I1 et/ou t1, éventuellement tout en maintenant constante la valeur moyenne Imoy. Comme sur la figure 7, les étapes F4 et F5 suivent l'étape F3 et le régulateur se reboucle sur l'étape F17 si la charge n'est pas terminée (sortie Non de F4)

Dans ce quatrième mode de réalisation, la première valeur de pente P1 est calculée à la fin de la première période t1 et la première amplitude I1 et/ou la durée de la première période t1 sont asservies à cette première valeur de pente P1. Par contre, la durée de la seconde période t2 est asservie sur la seconde valeur de pente P2, calculée en continu pendant la seconde période t2. Celle-ci est interrompue lorsque la seconde valeur de pente P2 entre dans la seconde plage.

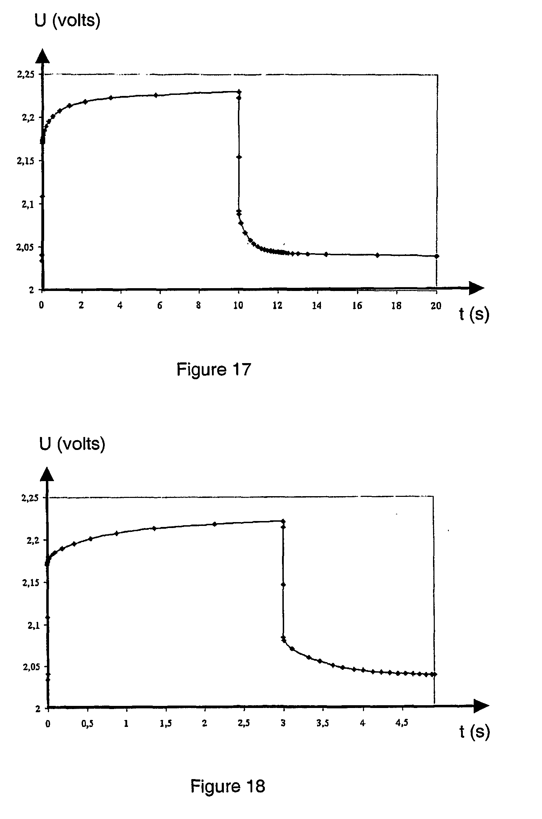

Les figures 17 et 18 illustrent plus en détail les variations de la tension mesurée lors de la charge d'une batterie au plomb-acide d'une capacité initiale de 25Ah.

La batterie est chargée avec un courant pulsé prenant une première amplitude I1 de 2,5A pendant une première période t1 de 10s et une seconde amplitude I2 nulle pendant une seconde période t2 de 10s.

La figure 17 illustre les variations de tension sans adaptation des paramètres temporels des impulsions de courant conformément à l'invention, pour un état de charge de 90%. Les valeurs de pente P1 et P2 à la fin des première et seconde périodes sont respectivement égales à 0,9mV/s et à 0,2mV/s, en valeur absolue. Ces deux valeurs sont, en valeur absolue, inférieures à la limite inférieure de 1mV/s des première et seconde plage correspondante. Les durées des première et seconde périodes sont donc inadaptées.

La figure 18 illustre les variations de tension obtenues après adaptation des paramètres temporels t1 et t2 conformément à l'invention. L'asservissement de t1 et t2 sur les valeurs de pente P1 et P2 conduit à une diminution de t1 et t2 pour amener P1 et P2 dans leurs plages respectives à la fin des première et seconde périodes. Sur la figure 18, les paramètres optimums obtenus sont de 3s pour t1 et de 1,9s pour t2. Les première et seconde valeurs de pente P1 et P2, respectivement à la fin des première et seconde périodes, sont alors, en valeur absolue, respectivement égales à 5mV/s et 3mV/s.

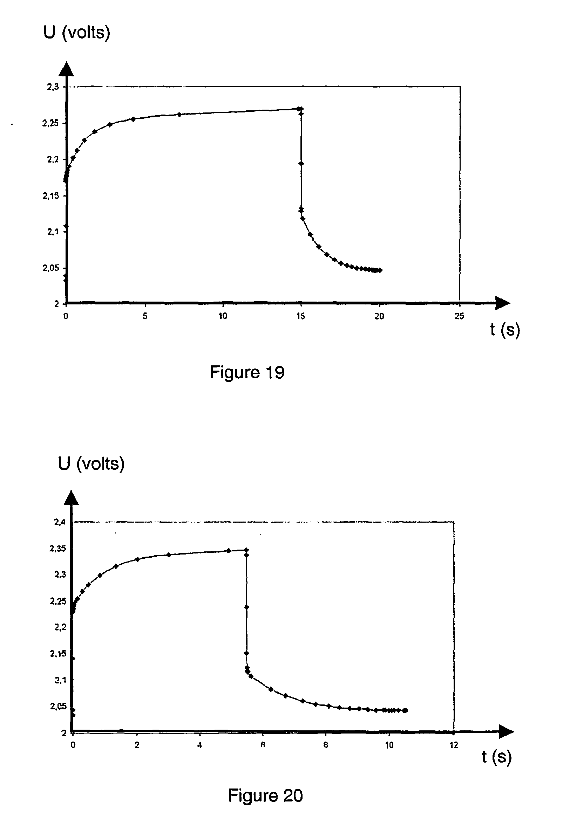

Dans l'exemple illustré aux figures 19 et 20, une batterie au plomb-acide, d'une capacité initiale de 25Ah est chargée avec un courant moyen Imoy constant. Initialement la première période t1 est de 15s, pour un courant de charge ayant une première amplitude I1 de 2,5A, tandis que la seconde période t2 est fixée à 5s avec un courant de charge ayant une seconde amplitude I2 nulle.

Sur la figure 19, sans adaptation des paramètres du courant, pour un état de charge de 95%, les valeurs absolues des valeurs de pente P1 et P2 à la fin des première et seconde périodes sont respectivement égales à 0,6mV/s et à 1,3mV/s. La première valeur de pente P1 est donc inférieure à la limite inférieure de 1mV/s de la première plage, tandis que la valeur absolue de la seconde valeur de pente P2 à la fin de la seconde période est dans les limites de la seconde plage. Les paramètres du courant de charge sont donc inadaptés.

La figure 20 illustre les variations de tension obtenues après adaptation des paramètres du courant conformément à l'invention. L'asservissement de l1 et t1 sur la première valeur de pente P1 conduit à une diminution de t1 et à une augmentation de Il pour amener P1 dans la première plage à la fin de la première période. Sur la figure 20, les paramètres optimums obtenus sont de 5,5s pour t1 et de 3,58A pour I1. La première valeur de pente P1 à la fin de la première période est alors égale à 2,4mV/s, tandis que la valeur absolue de la seconde valeur de pente P2 à la fin de la seconde période reste inchangée à 1,3mV/s.

Le procédé de charge selon l'invention permet donc d'adapter en continu l'ensemble des paramètres du courant pulsé lors de la charge ou de la recharge de tout type de batterie, par exemple pour différents types de batteries au plomb-acide, et pour tout type d'application, notamment pour des batteries utilisées dans des véhicules électriques, dans des applications photovoltaïques, etc.

Il s'applique aussi bien à la recharge de la batterie au cours de son utilisation qu'à la toute première charge de la batterie lors de la fabrication de celle-ci. En effet, la première charge d'une batterie au plomb lors de sa fabrication permet de former du dioxyde de plomb $PbO_2$ aux plaques positives de la batterie et du plomb Pb aux plaques négatives de la batterie. Or le plomb et le dioxyde de plomb sont les deux espèces chimiques produites lors des charges de la batterie, tandis que le sulfate de plomb $PbSO_4$ apparaît lors de la décharge de la batterie. Actuellement, une fabrication classique d'une batterie ne conduit qu'à une utilisation partielle, inférieure à 50%, de la matière active. Or, il a été montré, dans un article de Diniz et al., dans "Journal of Power Sources", vol.109, p.184-188, de 2002, que l'utilisation de courant pulsé lors de la formation des plaques pouvait, dans certains cas, conduire à une forte augmentation, pouvant aller jusqu'à 74%, de la matière active utile et, en conséquence, augmenter l'efficacité faradique de la batterie. L'application du procédé selon l'invention à la première charge d'une batterie au cours de sa fabrication permet d'optimiser les paramètres de charge.

L'invention n'est pas limitée aux modes particuliers de réalisation décrits ci-dessus. En particulier, l'asservissement d'un des paramètres du courant sur la pente de la tension U en fonction du temps peut être limitée à une seule des première et seconde périodes. Bien que l'asservissement des deux valeurs de pentes P1 et P2 permette une meilleure optimisation, l'asservissement d'une seule valeur de pente, P1 ou P2, peut être envisagée et permet déjà d'améliorer la charge de la batterie par rapport aux procédés de charge connus.

Comme représenté sur les figures 2 à 6 et 17 à 20, la valeur de pente P2 est négative, tandis que la valeur de pente P1 est positive. L'utilisation préférentielle de la valeur absolue lors du calcul des valeurs de pente permet de s'affranchir des signes lors de la comparaison des valeurs de pente aux plages, qui peuvent elles-mêmes alors être définies uniquement en valeur absolue.

## Revendications

1. Procédé de charge d'une batterie par des impulsions rectangulaires de courant, prenant alternativement une première amplitude (l1), pendant une première période (t1), et une seconde amplitude (l2), différente de la première (l1), pendant une seconde période (t2), procédé comportant la détermination d'une première valeur de pente (P1), représentative de la variation de la tension (U) aux bornes de la batterie en fonction du temps, à partir de mesures successives (U(t-$\Delta$t), U(t)) de ladite tension (U) pendant chaque première période (t1), procédé **caractérisé en ce que** la première amplitude (l1) et la durée (t1) de la première période étant préalablement déterminées, le procédé comporte l'asservissement d'au moins un des paramètres (l1, t1) du courant pendant les premières périodes ultérieures à ladite première valeur de pente (P1), calculée et comparée à une première plage prédéterminée à la fin de chaque première période (t1), la première amplitude (l1) de courant et/ou la durée (t1) de la première période étant modifiées si la première valeur de pente (P1) sort de la première plage.

2. Procédé selon la revendication 1, **caractérisé en ce que** la première plage est, en valeur absolue, comprise entre 1 mV/s et 6mV/s.

3. Procédé selon l'une quelconque des revendications 1 et 2, **caractérisé en ce qu'**il comporte

   - au moins deux mesures successives (U(t-$\Delta$t), U(t)) de la tension (U) aux bornes de la batterie pendant chaque seconde période (t2),
   - le calcul, à partir des mesures de tension pendant la seconde période, au moins à la fin de chaque seconde période, d'une seconde valeur de pente (P2), représentative de la variation de la tension en fonction du temps,
   - la comparaison de la seconde valeur de pente (P2) à une seconde plage prédéterminée,
   - l'asservissement d'au moins un des paramètres (12, t2) du courant pendant la seconde période (t2) à la seconde valeur de pente (P2).

4. Procédé selon la revendication 3, **caractérisé en ce que** la seconde plage est, en valeur absolue, comprise entre 1 mV/s et 6mV/s.

5. Procédé selon l'une des revendications 3 et 4, **caractérisé en ce que,** pendant chaque seconde période, les mesures successives de la tension sont réalisées à des intervalles de temps ($\Delta$t) prédéterminés, très inférieurs à la seconde période (t2), la seconde valeur de pente (P2) étant calculée et comparée à la seconde plage après chaque mesure de tension, la seconde période (t2) étant interrompue lorsque la seconde valeur de pente (P2) entre dans la seconde plage.

6. Procédé selon l'une des revendications 3 et 4, **caractérisé en ce que** la seconde valeur de pente (P2) est calculée et comparée à la seconde plage à la fin de la seconde période (t2), la seconde amplitude (I2) de courant et/ou la durée (t2) de la seconde période étant modifiées si la seconde valeur de pente (P2) sort de la seconde plage.

7. Procédé selon la revendication 6, **caractérisé en ce que,** la seconde amplitude (12) de courant étant nulle, la durée (t2) de la seconde période et la première amplitude (I1) de courant sont modifiées si la seconde valeur de pente (P2) sort de la seconde plage.

8. Procédé selon l'une quelconque des revendications 1 à 7, **caractérisé en ce que** les paramètres du courant sont modifiés de manière à maintenir constante la valeur moyenne (Imoy) de l'amplitude du courant pendant une période de charge constituée par une première période (t1) et la seconde période (t2) suivante.

**Claims**

1. Method for charging a battery by rectangular current pulses alternately taking a first amplitude (I1) during a first period (t1) and a second amplitude (12), different from the first one (11), during a second period (t2), method comprising determination of a first slope value (P1) representative of the variation of the voltage (U) at the battery terminals versus time, from successive measurements (U(t-$\Delta$t), U(t)) of said voltage (U) during each first period (t1), method **characterized in that** the first amplitude (I1) and the duration (t1) of the first period being previously determined, the method comprises servo-control of at least one of the current parameters (I1, t1) during the subsequent first periods as a function of said first slope value (P1) calculated and compared with a first predetermined range at the end of each first period (t1), the first current amplitude (I1) and/or the duration (t1) of the first period being modified if the first slope value (P1) goes outside the first range.

2. Method according to claim 1, **characterized in that** the first range is, in absolute value, comprised between 1 mV/s and 6mV/s.

3. Method according to one of claims 1 and 2, **characterized in that** comprises

    - at least two successive measurements (U(t-$\Delta$t), U(t)) of the voltage (U) at the battery terminals during each second period (t2),
- calculation, from the voltage measurements during the second period, at least at the end of each second period, of a second slope value (P2) representative of the variation of the voltage versus time,
- comparison of the second slope value (P2) with a second predetermined range,
- servo-control of at least one of the parameters (12, t2) of the current during the second period (t2) as a function of the second slope value (P2).

4. Method according to claim 3, **characterized in that** the second range is, in absolute value, comprised between 1 mV/s and 6mV/s.

5. Method according to any one of claims 3 and 4, **characterized in that,** during each second period, the successive voltage measurements are made at predetermined time intervals ($\Delta$t), much shorter than the second period (t2), the second slope value (P2) being calculated and compared with the second range after each voltage measurement, the second period (t2) being interrupted when the second slope value (P2) enters the second range.

6. Method according to one of claims 3 and 4, **characterized in that** the second slope value (P2) is calculated and compared with the second range at the end of the second period (t2), the second current amplitude (12) and/or the duration (t2) of the second period being modified if the second slope value (P2) goes outside the second range.

7. Method according to claim 6, **characterized in that,** the second current amplitude (I2) being zero, the duration (t2) of the second period and the first current amplitude (I1) are modified if the second slope value (P2) goes outside the second range.

8. Method according to any one of claims 1 to 7, **characterized in that** the current parameters are modified so as to keep the mean value (Imean) of the current amplitude constant during a charging period constituted by a first period (t1) and the following second period (t2).

**Patentansprüche**

1. Verfahren zum Aufladen einer Batterie mittels Rechteckstromimpulsen, wobei abwechselnd während einer ersten Periode (t1) eine erste Amplitude (11) und während einer zweiten Periode (t2) eine zweite Amplitude (12) verwendet werden, die sich von der ersten (11) unterscheidet, Verfahren, das die Bestimmung eines ersten Steilheitswerts (P1) umfasst, der repräsentativ ist für die Spannungsschwankungen (U) an den Klemmen der Batterie in Abhängigkeit von der Zeit, auf der Grundlage aufeinanderfolgender Messungen (U(t-Δt), U(t)) der genannten Spannung (U) während jeder ersten Periode (t1), Verfahren, das **dadurch gekennzeichnet ist, dass**, wenn die erste Amplitude (I1) und die Dauer (t1) der ersten Periode vorab festgelegt sind, das Verfahren die Servo-Regelung mindestens eines der Parameter (I1, t1) des Stroms während der folgenden ersten Perioden in Abhängigkeit von dem ersten Steilheitswert (P1), der am Ende der ersten Periode (t1) berechnet und mit einem ersten vorbestimmten Bereich verglichen wird, umfasst, wobei die erste Stromamplitude (I1) und/oder die Dauer (t1) der ersten Periode angepasst werden, wenn der erste Steilheitswert (P1) den ersten Bereich verlässt.

2. Verfahren nach Anspruch 1, **dadurch gekennzeichnet, dass** der erste Bereich in absolutem Wert in einem Bereich von 1 bis 6 mV/s liegt.

3. Verfahren nach einem der Ansprüche 1 und 2, **dadurch gekennzeichnet, dass** es umfasst:

   - mindestens zwei aufeinanderfolgende Messungen (U(t-Δt), U(t)) der Spannung (U) an den Klemmen der Batterie während jeder zweiten Periode (t2),
   - ausgehend von den Spannungsmessungen während der zweiten Periode, zumindest am Ende jeder zweiten Periode, die Berechnung eines zweiten Steilheitswerts (P2), der repräsentativ für die Spannungsschwankungen in Abhängigkeit von der Zeit ist,
   - den Vergleich des zweiten Steilheitswerts (P2) mit einem zweiten vorbestimmten Bereich,
   - die Servo-Regelung mindestens eines der Parameter (12, t2) des Stroms während der zweiten Periode (t2) in Abhängigkeit von dem zweiten Steilheitswert (P2).

4. Verfahren nach Anspruch 3, **dadurch gekennzeichnet, dass** der zweite Bereich in absolutem Wert in einem Bereich von 1 bis 6 mV/s liegt.

5. Verfahren nach einem der Ansprüche 3 und 4, **dadurch gekennzeichnet, dass** während jeder zweiten Periode die aufeinanderfolgenden Messungen der Spannung in vorbestimmten Zeitabständen (Δt) erfolgen, die sehr viel kürzer als die zweite Periode (t2) sind, wobei der zweite Steilheitswert (P2) nach jeder Spannungsmessung berechnet und mit dem zweiten Bereich verglichen und die zweite Periode (t2) unterbrochen wird, wenn der zweite Steilheitswert (P2) in den zweiten Bereich eintritt.

6. Verfahren nach einem der Ansprüche 3 und 4, **dadurch gekennzeichnet, dass** der zweite Steilheitswert (P2) am Ende der zweiten Periode (t2) berechnet und mit dem zweiten Bereich verglichen wird, wobei die zweite Stromamplitude (I2) und/oder die Dauer (t2) der zweiten Periode angepasst werden, wenn der zweite Steilheitswert (P2) den zweiten Bereich verlässt.

7. Verfahren nach Anspruch 6, **dadurch gekennzeichnet, dass,** wenn die zweite Stromamplitude (I2) Null ist, die Dauer (t2) der zweiten Periode und die erste Stromamplitude (I1) angepasst werden, wenn der zweite Steilheitswert (P2) den zweiten Bereich verlässt.

8. Verfahren nach einem der Ansprüche 1 bis 7, **dadurch gekennzeichnet, dass** die Stromparameter so angepasst werden, dass der mittlere Wert (Imoy) der Stromamplitude während einer Aufladeperiode konstant gehalten werden, die von einer ersten Periode (t1) und der folgenden zweiten Periode (t2) gebildet wird.

Figure 1

Figure 2

Figure 3

Figure 4

Figure 5

Figure 6

Initialisation
(Fig.8) — F1

Charge avec I1 tant que P1
reste en dehors de la
$1^{\text{ère}}$ plage
(Fig. 9) — F2

Charge avec I2 tant que P2
reste en dehors de la
$2^{\text{nde}}$ plage
(Fig. 10) — F3

Non — Arrêt? — F4

Oui

Fin de charge — F5

Figure 7

Initialisation
(F1)

Détermination I1, I2 — F6

U(t) = 0 — F7

Figure 8

Initialisation
(F16)

Détermination
I1, t1, I2, t2 — F27

U(t) = 0 — F7

Figure 12

Charge avec I1 tant que
P1 reste en dehors de la
1$^{ère}$ plage
(F2)

I = I1
U(t-Δt) = U(t)    F8

Mesure U(t)    F9

Calcul P1    F10

Non    1mV < P1 < 6mV ?    F11

Oui

Figure 9

Charge avec I2 tant que
P2 reste en dehors de la
$2^{nde}$ plage
(F3)

$I = I2$
$U(t-\Delta t) = U(t)$

F12

Mesure U(t)

F13

Calcul P2

F14

Non

$1mV < P2 < 6mV$ ?

F15

Oui

Figure 10

```
                    ┌─────────────────────┐
                    │    Initialisation   │          F16
                    │      (Fig.12)       │
                    └─────────────────────┘
                              │
           ┌──────────────────┤
           │                  ▼
           │      ┌─────────────────────┐
           │      │   Charge avec I1    │          F17
           │      │     pendant t1      │
           │      │      (Fig. 13)      │                      F10
           │      └─────────────────────┘              ┌─────────────────┐
           │                  │                        │    Calcul P1    │
           │                  ├────────────────────────┤                 │
           │                  │                        └─────────────────┘
           │                  │                                    │
           │                  │                              ◇───────────────◇   F11
           │                  │                             ╱                 ╲
           │                  │                            ◇  1mV < P1 < 6mV ? ◇
           │                  │                             ╲                 ╱
           │                  │                              ◇───────────────◇
           │                  │                                    │
           │                  │                                    │Non      F18
           │                  │                        ┌──────────────────────────┐
           │                  │                        │ Calcul nouveaux paramètres│
           │                  │                        └──────────────────────────┘
           │      ┌─────────────────────┐
           │      │   Charge avec I2    │
           │      │     pendant t2      │          F19
           │      │      (Fig. 14)      │                      F14
           │      └─────────────────────┘              ┌─────────────────┐
           │                  │                        │    Calcul P2    │
           │                  ├────────────────────────┤                 │
           │                  │         F4             └─────────────────┘
           │            ◇───────────────◇                        │
     Non   │           ╱                 ╲                  ◇───────────────◇   F15
    ───────┤          ◇      Arrêt?       ◇                ╱                 ╲
           │           ╲                 ╱                ◇  1mV < P2 < 6mV ? ◇
           │            ◇───────────────◇                 ╲                 ╱
           │                  │                            ◇───────────────◇
           │                  │Oui                                │
           │                  │              F5                   │Non      F20
           │      ┌─────────────────────┐        ┌──────────────────────────┐
           │      │    Fin de charge    │        │ Calcul nouveaux paramètres│
           │      └─────────────────────┘        └──────────────────────────┘
           │                  │
```

Figure 11

Figure 13

Charge avec I2
pendant t2
(F19)

| t = 0 | F31 |

| I = I2<br>U(t-Δt) = U(t) | F12 |

| Mesure U(t) | F13 |

| t = t + Δt | F32 |

F33

Non          t = t2 ?

Oui

Figure 14

Initialisation — F34

Charge avec I1 tant que P1
reste en dehors de la
1$^{\text{ère}}$ plage
(Fig. 9) — F2

Charge avec I2
pendant t2
(Fig. 14) — F19

F14

Calcul P2

F4

Non — Arrêt?

Oui

F15

1mV < P2 < 6mV ?

Non — F20

F5

Fin de charge

Calcul nouveaux paramètres

Figure 15

19

Initialisation — F35

Charge avec I1
pendant t1
(Fig. 9) — F17

Calcul P1 — F10

Charge avec I2 tant que P2
reste en dehors de la
2$^{nde}$ plage
(Fig. 10) — F3

$1mV < P1 < 6mV$ ? — F11

Non

Calcul nouveaux paramètres — F18

F4

Non

Arrêt?

Oui   F5

Fin de charge

Figure 16

Figure 17

Figure 18

U (volts)

Figure 19

U (volts)

Figure 20

## RÉFÉRENCES CITÉES DANS LA DESCRIPTION

**Documents brevets cités dans la description**

- US 6154011 A
- US 5412306 A
- EP 1341286 A
- US 5710506 A

**Littérature non-brevet citée dans la description**

- **DINIZ et al.** *Journal of Power Sources,* 2002, vol. 109, 184-188